# EUROPÄISCHE PATENTSCHRIFT

(11) **EP 3 666 575 B1**
(45) Veröffentlichungstag und Bekanntmachung des Hinweises auf die Patenterteilung: **05.05.2021**
(21) Anmeldenummer: 19207617.2
(22) Anmeldetag: 07.11.2019
(51) Int. Cl.: B60K 26/02

(54) **GASPEDALANORDNUNG MIT HAPTISCHER RÜCKMELDUNG**
ACCELERATOR PEDAL ASSEMBLY WITH HAPTIC FEEDBACK
AGENCEMENT DE PÉDALE D'ACCÉLÉRATEUR À RÉTROACTION HAPTIQUE

(30) Priorität: 29.11.2018 DE 102018130239
(43) Veröffentlichungstag der Anmeldung: 17.06.2020
(73) Patentinhaber: WABCO GmbH, 30453 Hannover (DE)
(72) Erfinder: LÜLFING, Ralph-Carsten, 30826 Garbsen (DE); RIEDIGER-JANISCH, Karl-Heinz, 30455 Hannover (DE)
(74) Vertreter: Rabe, Dirk-Heinrich

(56) Entgegenhaltungen:
- DE-A1- 3 422 667
- DE-A1- 4 417 216
- DE-A1-102015 202 860
- US-A- 3 623 693

## Beschreibung

Die Erfindung betrifft eine Gaspedalanordnung für Kraftfahrzeuge, aufweisend ein von einem Fahrer betätigbares, zwischen einer Anfangsstellung und einer durch einen Anschlag begrenzten Endstellung verstellbares Gaspedal, welches mit einem elektronischen Motorsteuerungssystem wirkverbunden ist, das die Gaspedalstellung in die gewünschte Motorleistung umsetzt.

Bei konventionellen Motorsteuerungssystemen steuert der Fahrer über das Fahr- oder Gaspedal direkt die Öffnung einer Drosselklappe eines Vergasers zum Beispiel gegen die Kraft einer Rückstellfeder für diese Drosselklappe, sodass der Fahrer im Allgemeinen eine unmittelbare haptische Rückmeldung proportional zur Federkraft für die von ihm gewählte Motorleistungsstufe erhält.

Bei modernen Motorsteuerungssystemen, beispielsweise mit "elektronischem Gaspedal" (EGAS) und elektrischem Drosselklappenantrieb (Bosch, Kraftfahrtechnisches Taschenbuch, 25. Aufl., S. 595) besteht ebenfalls eine zum Beispiel proportionale Rückmeldung, sodass der Fahrer ein gewisses haptisches Gefühl für die von ihm gewählte Leistungseinstellung des Motors bekommt. Was bisher nicht möglich war, das ist eine parametrierbare haptische Rückmeldung, welche die federkraftbeeinflusste Gegenkraft modifiziert.

Gaspedalanordnungen für Kraftfahrzeuge sind z.B. aus DE 44 17 216 A1, US 3 623 693 A, DE 34 22 667 A1 und DE 10 2015 202 860 A1 bekannt.

Vor diesem Hintergrund lag der Erfindung die Aufgabe zugrunde, eine Gaspedalanordnung der eingangs genannten Art so zu verbessern, dass dem Fahrer eine mechanisch und/oder softwaretechnisch beeinflussbare Rückmeldung über die Stellung des Gaspedals beziehungsweise über die von ihm gewählte Leistungseinstellung des Motors vermittelt wird.

Die Lösung dieser Aufgabe wird mit einer Gaspedalanordnung erreicht, welche die Merkmale des Anspruchs 1 aufweist. Vorteilhafte Ausgestaltungen und Weiterbildungen der Erfindung den abhängigen Ansprüchen definiert.

Demnach geht die Erfindung aus von einer Gaspedalanordnung für Kraftfahrzeuge, aufweisend ein von einem Fahrer betätigbares, zwischen einer Anfangsstellung und einer durch einen Anschlag begrenzten Endstellung verstellbares Gaspedal, welches mit einem elektronischen Motorsteuerungssystem wirkverbunden ist.

Zur Lösung der gestellten Aufgabe ist dabei vorgesehen, dass zwischen dem Gaspedal und dem Anschlag zur Begrenzung von dessen Endstellung ein Luftfederbalg angeordnet ist, welcher über eine von einer elektronischen Steuereinheit in Abhängigkeit von der Stellung des Gaspedals ansteuerbaren Steuerventilanordnung mit einer Druckluftquelle derart verbunden ist, dass der Luftfederbalg mit zunehmendem Pedalweg eine zunehmende Gegenkraft auf das Gaspedal erzeugen kann.

Hierdurch ist es insbesondere möglich, eine bisher untypische, also zum Stellweg des Gaspedals nicht proportionale Gegenkraft zu erzeugen. Eine veränderbare Kennlinie für eine entsprechende Steuerung durch die elektronische Steuereinheit ist dort abgespeichert. Zum Beispiel kann eine erhöhte Gegenkraft auf das Gaspedal als haptische Rückmeldung genutzt werden, um eine weitere Beschleunigung des Fahrzeugs durch den Fahrer zu erschweren. Dies könnte sinnvoll sein, wenn eine zulässige Geschwindigkeit auf einem befahrenen Streckenabschnitt bereits erreicht oder leicht überschritten ist und/oder wenn das Fahrzeug kurz darauf eine Hügelkuppe erreicht. Dennoch kann der Fahrer das Gaspedal weiter auslenken, wozu er jedoch eine erhöhte Kraft aufwenden muss.

Luftfederbälge gelten als einfache und zuverlässige Bauelemente, deren Federkraft über eine geeignete Steuerventilanordnung entsprechend einer gewünschten Federkennlinie gesteuert werden kann. Die Ansteuerung der Steuerventilanordnung erfolgt über die elektronische Steuereinheit, welche ein Bestandteil eines ohnehin vorhandenen elektronischen Motorsteuerungssystems sein kann.

Gemäß einer bevorzugten Ausgestaltung der Erfindung ist der Luftfederbalg als Faltenbalg ausgebildet. Faltenbälge bieten gute Federungseigenschaften in axialer Richtung.

Um insbesondere den Faltenbalg in lateraler Richtung zu stabilisieren, kann gemäß einer weiteren Ausgestaltung der Erfindung vorgesehen sein, dass im Inneren des Faltenbalgs in an sich bekannter Weise eine Stützspiralfeder angeordnet ist.

Gemäß einer dazu alternativen Ausgestaltung der Erfindung kann der Luftfederbalg auch als Schlauchbalg ausgebildet sein. Schlauchbälge stellen insbesondere herstellungstechnisch besonders einfache Bauelemente dar. Es können jedoch auch andere Luftfederbalg-Bauformen zur Anwendung gelangen.

Die Steuerventilanordnung weist gemäß einer ersten Ausführungsform ein von der elektronischen Steuereinheit ansteuerbares 3/2-Wegeventil auf, welches in einer ersten Betriebsstellung den Luftfederbalg mit der zugeordneten Druckluftquelle verbindet und in der anderen Betriebsstellung den Luftfederbalg entlüftet. Auf diese Weise kann die Federkraft des Luftfederbalges entsprechend der gewünschten Federkennlinie kontinuierlich oder diskontinuierlich verändert werden.

Gemäß einer anderen Ausführungsform der Erfindung weist die Steuerventilanordnung zwei von der elektronischen Steuereinheit angesteuerte 2/2-Wegeventile auf, deren eines 2/2-Wegeventil in geöffnetem Zustand den Luftfederbalg mit der Druckluftquelle verbindet, wobei das andere 2/2-Wegeventil geschlossen bleibt, und deren anderes 2/2-Wegeventil in geöffneter Stellung den Luftfederbalg entlüftet, während das erstere 2/2-Wegeventil geschlossen ist. Diese Anordnung erlaubt es auch, beide Wegeventile gleichzeitig zu schließen und damit den Druckluftraum des Luftfederbalgs gegenüber der Druckluftquelle abzusperren.

Typischerweise ist das Gaspedal um einen Winkel von wenigstens 25° schwenkbar gelagert. In einer alternativen Ausführungsform das genannte Gaspedal ist der Luftfederbalg gemäß der Erfindung so ausgebildet, dass er lateral nicht abgestützt, also zumindest in dem dadurch vorgegebenen Bereich lateral frei beweglich ausgebildet ist, so dass er den Bewegungen des Gaspedals folgen kann. Alternativ dazu kann jedoch auch vorgesehen sein, dass der Luftfederbalg lateral abgestützt ist.

Die Erfindung wird nachfolgend anhand eines Ausführungsbeispiels weiter erläutert. Dazu ist der Beschreibung eine Zeichnung beigefügt. In dieser zeigt
Fig. 1 schematisch in einer seitlichen Teil-Schnittansicht ein Gaspedal mit einem Luftfederbalg in seiner Anfangsstellung, und
Fig. 2 eine Ansicht entsprechend der Fig. 1, mit dem Gaspedal in seiner Endstellung.

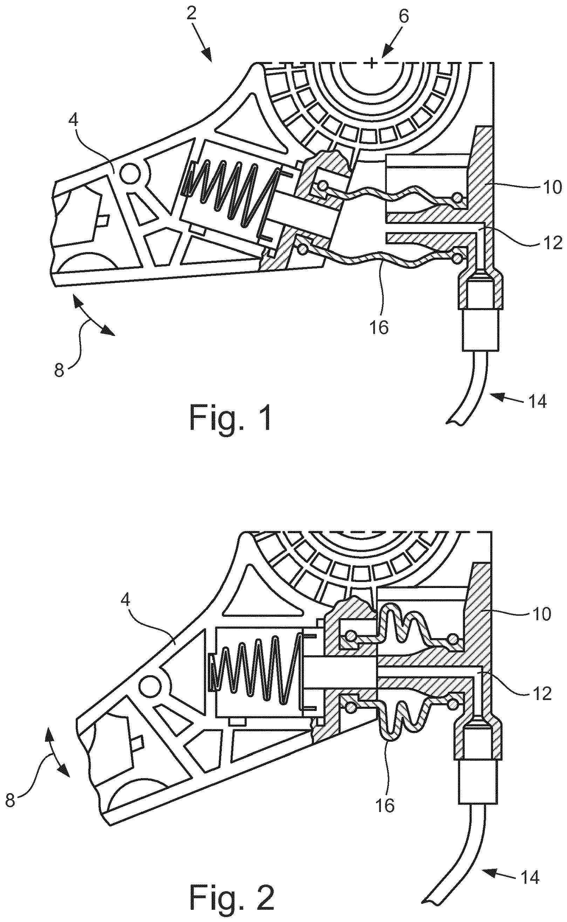

Die in der Fig. 1 dargestellte Gaspedalanordnung 2 umfasst ein von einem Fahrer betätigbares Gaspedal 4, welches um eine Achse 6 zwischen der in Fig. 1 dargestellten Anfangsstellung und der in Fig. 2 dargestellten Endstellung in Richtung des Doppelpfeiles 8 verschwenkbar gelagert ist. In der Endstellung liegt das Gaspedal 4 an einem Anschlag 10 an, der im vorliegenden Ausführungsbeispiel als massiver Block ausgebildet ist sowie einen Belüftungs- und Entlüftungskanal 12 aufnimmt, welcher seinerseits über eine Anschlussleitung 14 mit einer nicht dargestellten Steuerventilanordnung verbunden ist.

Zwischen dem Gaspedal 4 und dem Anschlag 10 ist ein hier als Faltenbalg ausgebildeter Luftfederbalg 16 angeordnet, welcher über den Belüftungs- und Entlüftungskanal 12 sowie die Anschlussleitung 14 über die genannte Steuerventilanordnung mit einer ebenfalls nicht dargestellten Druckluftquelle verbunden ist. Die Steuerventilanordnung wird von einer dem Fahrzeug zugeordneten elektronischen Steuereinheit so angesteuert, dass der Druck im Luftfederbalg in Abhängigkeit von dem durch Sensoren erfassten zunehmenden Schwenkweg des Gaspedals 4 eine zunehmende, der vom Fahrer aufgebrachten Kraft entgegenwirkende, frei vorwählbare Gegenkraft erzeugt. Auf diese Weise erhält der Fahrer eine unmittelbare Rückmeldung zu dem jeweiligen Pedalweg und damit zu der gewünschten Leistungserhöhung.

### Bezugszeichenliste (Bestandteil der Beschreibung)

- 2: Gaspedalanordnung
- 4: Gaspedal
- 6: Achse
- 8: Doppelpfeil
- 10: Anschlag
- 12: Belüftungs- und Entlüftungskanal
- 14: Anschlussleitung
- 16: Luftfederbalg

## Patentansprüche

1. Gaspedalanordnung (2) für Kraftfahrzeuge, aufweisend ein von einem Fahrer betätigbares, zwischen einer Anfangsstellung und einer durch einen Anschlag (10) begrenzten Endstellung verstellbares Gaspedal (4), welches mit einem elektronischen Motorsteuerungssystem wirkverbunden ist, wobei zwischen dem Gaspedal (4) und dem Anschlag (10) zur Begrenzung von dessen Endstellung ein Luftfederbalg (16) angeordnet ist, welcher über eine von einer elektronischen Steuereinheit in Abhängigkeit von der Stellung des Gaspedals (4) ansteuerbaren Steuerventilanordnung mit einer Druckluftquelle derart verbunden ist, dass der Luftfederbalg (16) mit zunehmendem Pedalweg eine zunehmende Gegenkraft auf das Gaspedal (4) erzeugen kann.

2. Gaspedalanordnung nach Anspruch 1, **dadurch gekennzeichnet, dass** der Luftfederbalg (16) als Faltenbalg ausgebildet ist.

3. Gaspedalanordnung nach Anspruch 2, **dadurch gekennzeichnet, dass** im Inneren des Luftfederbalges (16) zur lateralen Abstützung desselben eine Stützspiralfeder angeordnet ist.

4. Gaspedalanordnung nach Anspruch 1, **dadurch gekennzeichnet, dass** der Luftfederbalg als Schlauchbalg ausgebildet ist.

5. Gaspedalanordnung nach einem der Ansprüche 1 bis 4, **dadurch gekennzeichnet, dass** die Steuerventilanordnung ein 3/2-Wegeventil aufweist, welches in einer ersten Betriebsstellung die Druckluftquelle mit dem Luftfederbalg (16) verbindet und in der anderen Betriebsstellung den Luftfederbalg (16) entlüftet.

6. Gaspedalanordnung nach einem der Ansprüche 1 bis 4, **dadurch gekennzeichnet, dass** die Steuerventilanordnung zwei 2/2-Wegeventile aufweist, deren eines in geöffnetem Zustand die Druckluftquelle mit dem Luftfederbalg (16) verbindet, und deren anderes in geöffneter Stellung den Luftfederbalg (16) entlüftet.

7. Gaspedalanordnung nach einem der Ansprüche 1 bis 6, **dadurch gekennzeichnet, dass** der Luftfederbalg (16) lateral nicht abgestützt ist.

8. Gaspedalanordnung nach einem der Ansprüche 1 bis 6, **dadurch gekennzeichnet, dass** der Luftfederbalg (16) lateral abgestützt ist.

9. Gaspedalanordnung nach einem der Ansprüche 1 bis 8, **dadurch gekennzeichnet, dass** das Gaspedal (4) um einen Winkel von wenigstens 25° schwenkbar gelagert ist.

## Claims

1. An accelerator pedal assembly (2) for motor vehicles, having an accelerator pedal (4) actuatable by a driver, adjustable between an initial position and an end position limited by a stop (10), which is actively connected to an electronic engine control system,
wherein an air suspension bellows (16) is arranged between the accelerator pedal (4) and the stop (10) for the limiting of its end position, which is connected to a compressed air source via a control valve assembly controllable by an electronic control unit depending on the position of the accelerator pedal (4) such that the air suspension bellows (16), with an increasing pedal travel, can generate an increasing counterforce on the accelerator pedal (4) .

2. The accelerator pedal assembly according to claim 1, **characterized in that** the air suspension bellows (16) is embodied as a folding bellows.

3. The accelerator pedal assembly according to claim 2, **characterized in that** a support coil spring is arranged in the interior of the air suspension bellows (16) for lateral support of the same.

4. The accelerator pedal assembly according to claim 1, **characterized in that** the air suspension bellows is embodied as a hose bellows.

5. The accelerator pedal assembly according to any of claims 1 to 4, **characterized in that** the control valve assembly has a 3/2-way valve, which in a first operating position connects the compressed air source to the air suspension bellows (16) and in the other operating position ventilates the air suspension bellows (16).

6. The accelerator pedal assembly according to any of claims 1 to 4, **characterized in that** the control valve assembly has two 2/2-way valves, of which one in the opened state connects the compressed air source to the air suspension bellows (16), and the other of which in the opened position ventilates the air suspension bellows (16).

7. The accelerator pedal assembly according to any of claims 1 to 6, **characterized in that** the air suspension bellows (16) is not laterally supported.

8. The accelerator pedal assembly according to any of claims 1 to 6, **characterized in that** the air suspension bellows (16) is laterally supported.

9. The accelerator pedal assembly according to any of claims 1 to 8, **characterized in that** the accelerator pedal (4) is pivotably mounted by an angle of less than 25°.

## Revendications

1. Agencement de pédale d'accélérateur (2) pour des véhicules automobiles, qui présente une pédale d'accélérateur (4) actionnable par un conducteur et réglable entre une position de début et une position de fin limitée par une butée (10), laquelle pédale est fonctionnellement reliée à un système électronique de gestion du moteur,
dans lequel un soufflet à air (16) est agencé entre la pédale d'accélérateur (4) et la butée (10) pour limiter la position de fin de celle-ci, lequel est relié à une source d'air comprimé via un agencement de valve de commande qui peut être piloté par une unité de commande électronique en fonction de la position de la pédale d'accélérateur (4), de sorte que le soufflet à air (16) puisse, avec une course de pédale croissante, produire une force réactive croissante sur la pédale d'accélérateur (4).

2. Agencement de pédale d'accélérateur selon la revendication 1, **caractérisé en ce que** le soufflet à air (16) est conçu en tant que soufflet.

3. Agencement de pédale d'accélérateur selon la revendication 2, **caractérisé en ce qu'**un ressort hélicoïdal de support est agencé à l'intérieur du soufflet à air (16) pour soutenir latéralement celui-ci.

4. Agencement de pédale d'accélérateur selon la revendication 1, **caractérisé en ce que** le soufflet à air est conçu en tant que soufflet flexible.

5. Agencement de pédale d'accélérateur selon l'une des revendications 1 à 4, **caractérisé en ce que** l'agencement de valve de commande présente un distributeur 3/2 voies, lequel, dans une première position de fonctionnement, relie la source d'air comprimé au soufflet à air (16) et, dans l'autre position de fonctionnement, purge le soufflet à air (16).

6. Agencement de pédale d'accélérateur selon l'une des revendications 1 à 4, **caractérisé en ce que** l'agencement de valve de commande présente deux distributeurs 2/2 voies dont l'un, à l'état ouvert, relie la source d'air comprimé au soufflet à air (16) et l'autre, à l'état ouvert, purge le soufflet à air (16).

7. Agencement de pédale d'accélérateur selon l'une des revendications 1 à 6, **caractérisé en ce que** le soufflet à air (16) n'est pas soutenu latéralement.

8. Agencement de pédale d'accélérateur selon l'une des revendications 1 à 6, **caractérisé en ce que** le soufflet à air (16) est soutenu latéralement.

9. Agencement de pédale d'accélérateur selon l'une des revendications 1 à 8, **caractérisé en ce que** la pédale d'accélérateur (4) est montée de façon pivotante selon un angle d'au moins 25°.
